# EUROPEAN PATENT SPECIFICATION

(11) **EP 3 570 156 B1**
(45) Date of publication and mention of the grant of the patent: **03.09.2025**
(21) Application number: 19177083.3
(22) Date of filing: 03.08.2011
(51) Int. Cl.: G06F 3/12, G06F 1/16

(54) **CONTROLLING DEVICE MOUNTED ON PORTABLE TYPE TERMINAL DEVICE**
AUF TRAGBARE ENDGERÄTEVORRICHTUNG MONTIERTE STEUERUNGSVORRICHTUNG
CONTRÔLE DE DISPOSITIF MONTÉ SUR UN DISPOSITIF DE TERMINAL DE TYPE PORTABLE

(30) Priority: 06.08.2010 JP 2010177339
(43) Date of publication of application: 20.11.2019
(62) Divisional of application: 11176471.8
(73) Proprietor: BROTHER KOGYO KABUSHIKI KAISHA, Nagoya-shi, Aichi 467-8561 (JP)
(72) Inventor: SAKURAI, Kunihiko, Nagoya, Aichi 467-8562 (JP)
(74) Representative: J A Kemp LLP

(56) References cited:
- EP-A2- 1 469 668
- WO-A1-2010/030985
- JP-A- 2007 276 317
- US-A1- 2003 035 144
- US-A1- 2007 035 917
- US-A1- 2007 229 885

## Description

The technique taught in the present specification relates to a controlling device mounted on a portable type terminal device such as a mobile phone, PDA (Personal Digital Assistant), portable music player, notebook PC, tablet PC, etc.

JP 2007 2763 17 A aims to achieve most effective utilization of the area of a display section by enabling a user to rotate the display section according to the direction of images. A printer comprises a color LCD for displaying images in a memory card or displaying the operation screen of the printer, a display-section-rotating base for making the direction of the color LCD rotatable, a first mark for matching the direction of the display of the color LCD, a mark for indicating the position where the display is in landscape orientation, and a mark for indicating the position where the display is in portrait orientation. The user can select the direction of the display of the color LCD from among the landscape orientation and the portrait orientation by rotating the display-section-rotating base and matching either the first mark or the second mark to the mark.

WO 2010/030985 A describes that one or more elements are initially displayed on a display component of an electronic device. After the one or more elements have been displayed on the display component of the electronic device, an image of a user of the electronic device is captured, and an orientation of the electronic device relative to the user is determined based on the captured image of the user of the electronic device. Thereafter, an orientation of at least one of the displayed elements is adjusted relative to the display component of the electronic device based on the determined orientation of the electronic device relative to the user.

EP 1 469 668 discloses a print terminal which reads rectangular image data from a memory, displays the image and sends the image data to a printer. The terminal enables the user to independently rotate the displayed image to be printed and the image of the print medium, which corresponds to the feeding direction of the print medium in a printer. The image to be printed can thus be changed between landscape and portrait modes with respect to the orientation of the print medium to be used.

US 2007/035917 discloses a portable device operable in vertical and horizontal orientations that displays content in a upright manner in landscape or portrait mode depending on the orientation of the device, wherein a docking station receives the terminal for transferring data to a printer.

A mobile phone provided with a main body and a display capable of rotating relative to the main body is known (e.g., Japanese Patent Application Publication No. 2001-156893). In a state where the display is present in a vertical position, this mobile phone shows an image such that a left-right direction of the image is along a short side of the display and, in a state where the display is present in a horizontal position, the mobile phone shows the image such that the left- right direction of the image is along a long side of the display.

In the prior art, causing a printer to print the image shown in the display has not been taken into consideration. In the present specification, a technique is taught that can give a user an appropriate printout in a case where printing of an image is instructed on a portable type terminal device in which the direction of the image relative to the display can be switched.

According to the present invention, there is provided a print application according to appended claim 1 for a portable type terminal device.

Furthermore, according to the present invention there is provided a controlling method as defined in appended claim 9 and a non-transitory computer readable storage medium as defined in appended claim 7 that stores the above print application. Further, according to the present invention there is provided a portable type terminal device as defined in appended claim 8 comprising the above print application.

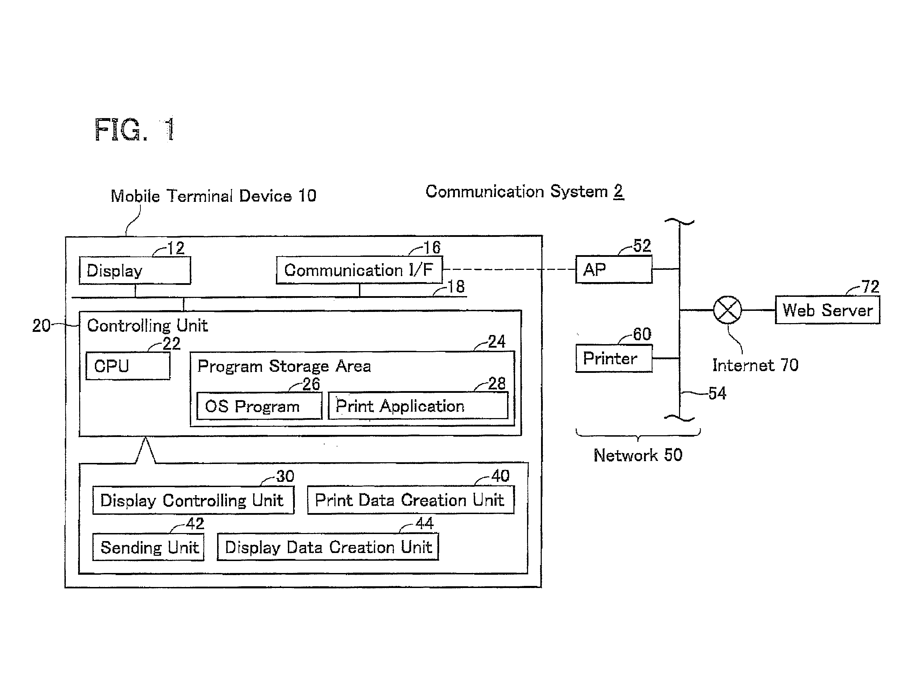

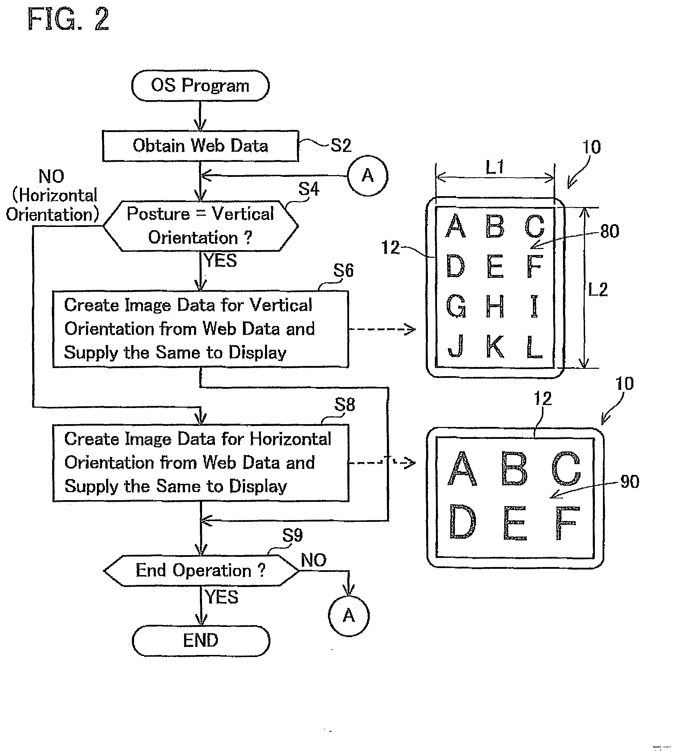

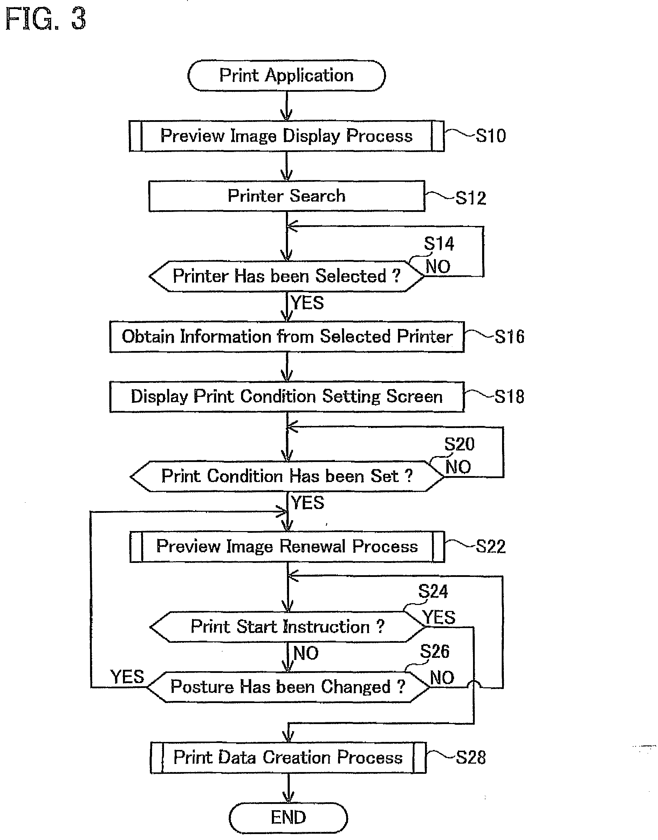

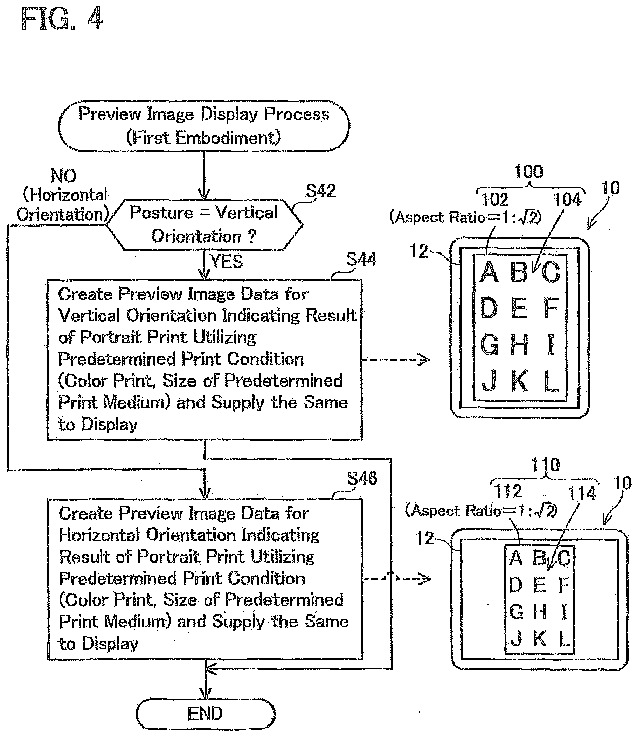

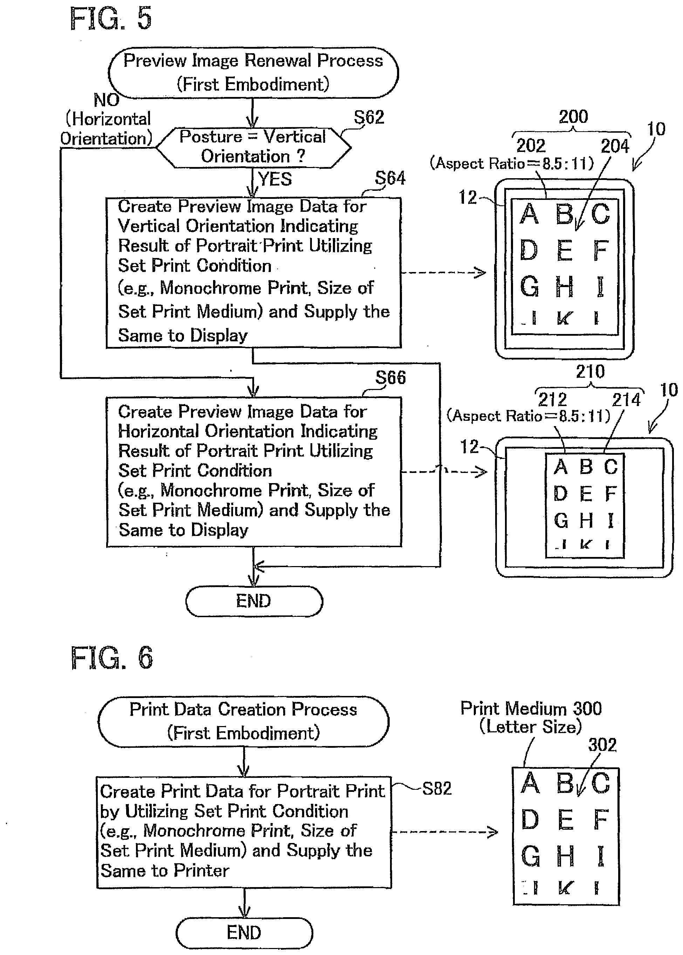

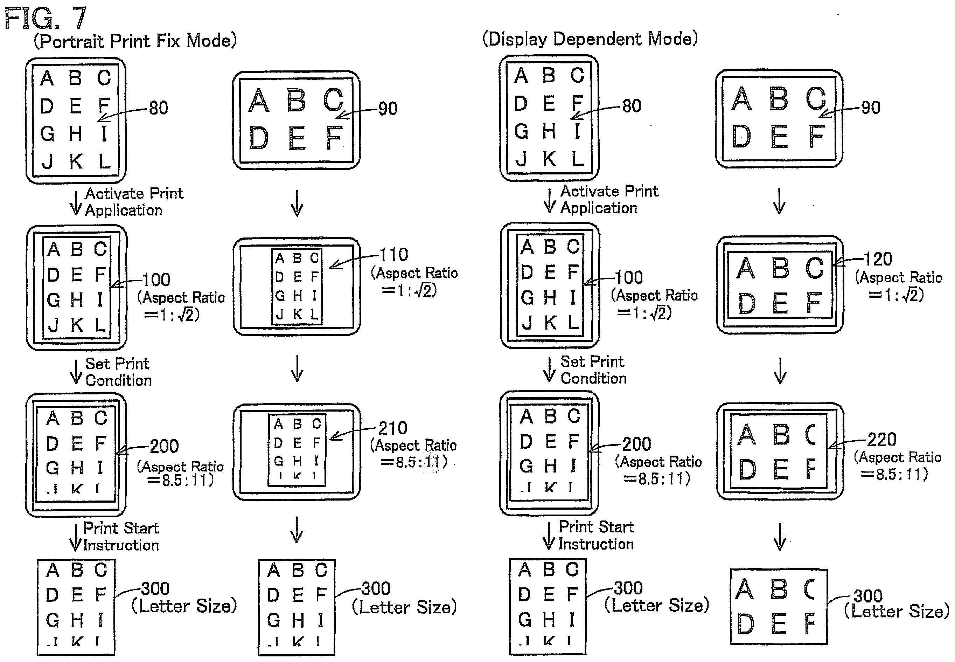

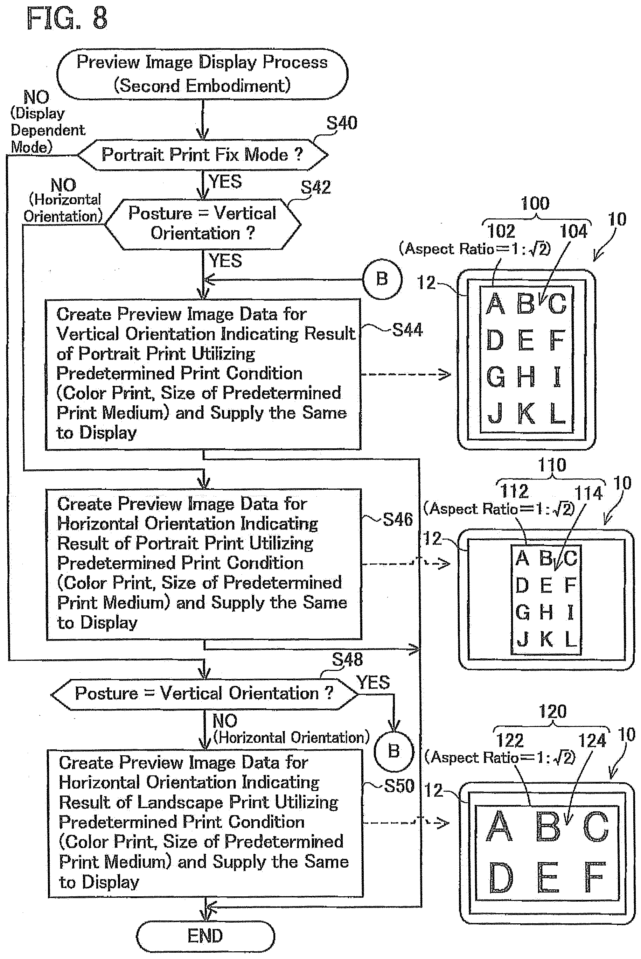

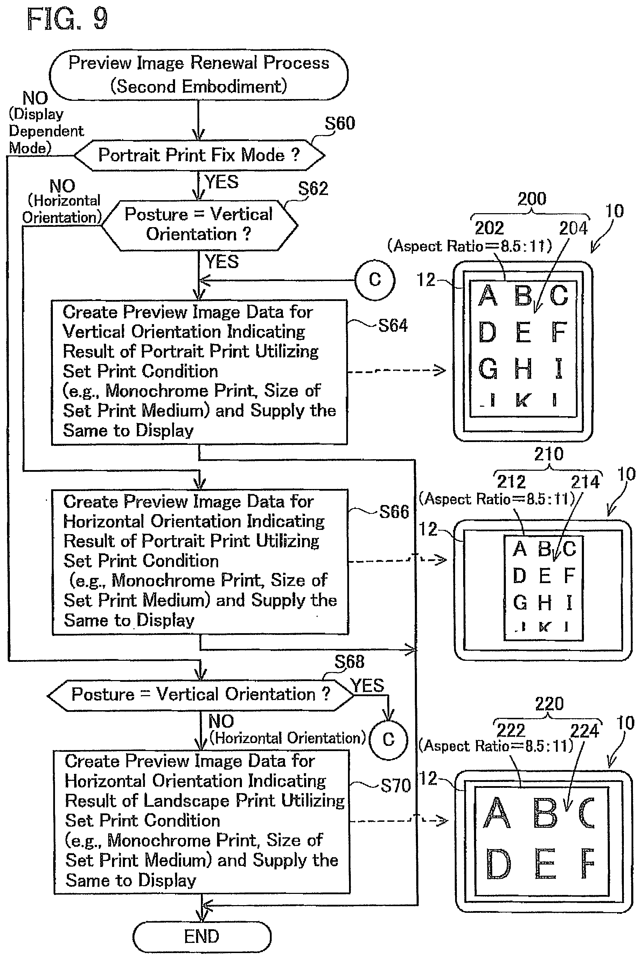

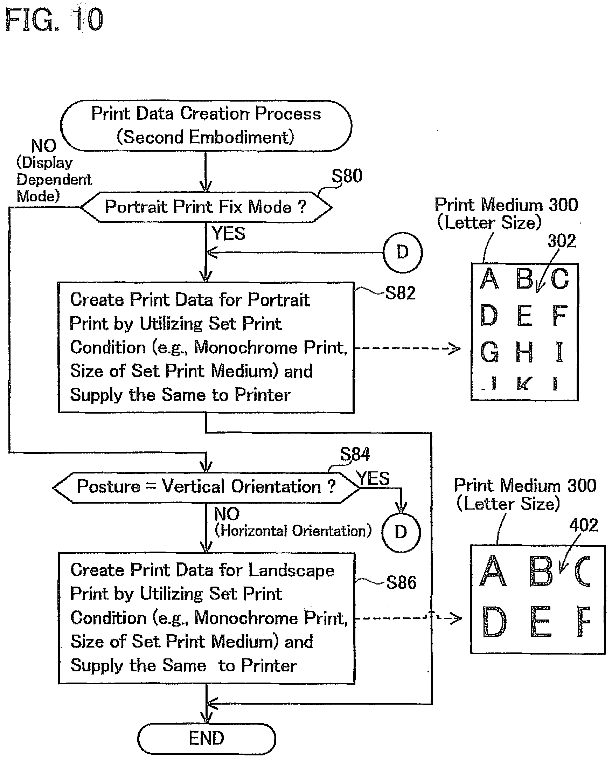

Fig. 1 shows a configuration of a communication system. Fig. 2 shows a flowchart of a process performed in accordance with an OS program. Fig. 3 shows a flowchart of a process performed in accordance with a print application. Fig. 4 shows a flowchart of a preview image display process of a first embodiment Fig. 5 shows a flowchart of a preview image renewal process of the first embodiment. Fig. 6 shows a flowchart of a print data creation process of the first embodiment. Fig. 7 shows processes until printing is performed. Fig. 8 shows a flowchart of a preview image display process of a second embodiment Fig. 9 shows a flowchart of a preview image renewal process of the second embodiment. Fig. 10 shows a flowchart of a print data creation process of the second embodiment.

### (First embodiment)

### (Configuration of system)

The first embodiment will be described with reference to the figures. As shown in Fig. 1, a communication system 2 comprises a mobile terminal device 10, a printer 60 and a Web server 72. The mobile terminal device 10 and the printer 60 are connected communicably via a network 50. The network 50 is a local area network (LAN) that is compliant with Wi-Fi (registered trademark) etc., and comprises an access point (AP) 52 and a network cable 54. The network 50 is connected with the Internet 70. The Web server 72 is connected with the Internet 70. The mobile terminal device 10 can be wirelessly connected with the network 50 via the AP 52. In this case, the mobile terminal device 10 can communicate with the printer 60 via the network 50 and, further, can communicate with the Web server 72 via the network 50 and the Internet 70.

### (Configuration of mobile terminal device 10)

The mobile terminal device 10 is a terminal device that can easily be carried by a user (i.e., a portable type terminal device). The mobile terminal device 10 is, e.g., a mobile phone, PDA, portable music player, notebook PC, tablet PC, etc. The mobile terminal device 10 comprises a display 12, a communication interface (communication I/F) 16 and a controlling unit 20. The units 12, 16, 20 are connected to a bus line 18. The communication I/F 16 is an I/F for the mobile terminal device 10 to perform wireless communication.

The display 12 is a display for showing various types of information. The exterior of the mobile terminal device 10 is shown in Fig. 2. As shown in Fig. 2, the display 12 has a rectangular shape in which the length of a short side is L1 and the length of a long side is L2 (i.e., a rectangular shape in which L2 is greater than L1). Furthermore, of the two mobile terminal devices 10 shown in Fig. 2, the upper figure shows the long side of the display 12 extending along a perpendicular direction relative to the ground surface (i.e., the gravitational direction). Further, the lower figure shows the short side of the display 12 extending along the perpendicular direction relative to the ground surface (i.e., the gravitational direction). Below, the state of the upper figure in Fig. 2 may be expressed as "the posture of the mobile terminal device 10 is vertically oriented", and the state of the lower figure in Fig. 2 may be expressed as "the posture of the mobile terminal device 10 is horizontally oriented". Furthermore, the display 12 of the present embodiment is a touch panel which also functions as an operation unit operated by the user.

The controlling unit 20 comprises a CPU 22 and a program storage area 24. The CPU 22 performs various processes in accordance with programs 26, 28 stored in the program storage area 24. The function of a display controlling unit 30 is realized by the CPU 22 performing processes in accordance with the OS program 26. Further, the functions of a print data creation unit 40, a sending unit 42, and a display data creation unit 44 are realized by the CPU 22 performing processes in accordance with the print application 28. Furthermore, the OS program 26 is pre-installed in the mobile terminal device 10 at the shipment stage of the mobile terminal device 10. Further, the print application 28 is installed in the mobile terminal device 10 by, e.g., being downloaded from a server supplied by a vendor or a manufacturer of the printer 60. Furthermore, instead of the present embodiment, the print application 28 may be pre-installed in the mobile terminal device 10 at the shipment stage of the mobile terminal device 10, or may be installed in the mobile terminal device 10 from a storage medium (media) such as a CD, etc.

### (Processes performed in accordance with OS program 26)

Next, the contents of processes performed in accordance with the OS program 26 will be described with reference to Fig. 2. Furthermore, below, the description will focus on a process for showing, in the display 12, an image represented by Web data. Although the OS program 26 actually realizes various other functions, a description of those functions will be omitted.

By operating the display 12, the user can instruct the mobile terminal device 10 to access the Web server 72. In this case, in S2, the display controlling unit 30 (see Fig. 1) accesses the Web server 72, and obtains HTML (Hyper Text Markup Language) format Web data from the Web server 72.

Next, in S4, the display controlling unit 30 determines the posture of the mobile terminal device 10 based on a value detected by a posture sensor (e.g., an acceleration sensor) that is not shown and is housed in the mobile terminal device 10. Specifically, the display controlling unit 30 determines whether the mobile terminal device 10 is vertically oriented (the state of the upper figure in Fig. 2) or horizontally oriented (the state of the lower figure in Fig. 2). Furthermore, in S4, the display controlling unit 30 does not determine exactly whether the posture of the mobile terminal device 10 is vertically or horizontally oriented, but determines whether the posture of the mobile terminal device 10 is closer to vertical or horizontal. Consequently, e.g., in a state where the mobile terminal device 10 has been rotated clockwise 30 degrees from a vertically oriented posture, with the center of the display 12 being the center of rotation, the display controlling unit 30 determines YES in S4 (for being closer to the vertical orientation). Further, e.g., in a state where the mobile terminal device 10 has been rotated clockwise 60 degrees from the vertically oriented posture, with the center of the display 12 being the center of rotation, the display controlling unit 30 determines NO in S4 (for being closer to the horizontal orientation). Furthermore, in the processes below, as well, in a case where the posture of the mobile terminal device 10 is to be determined (e.g., S42 of Fig. 4, S62 of Fig. 5), the determination is performed in the same manner as S4.

In a case of YES in S4 (the case of being closer to the vertical orientation), in S6 the display controlling unit 30 creates RGB image data for vertical orientation in BMP format using the HTML format Web data obtained in S2. In Web data, the up-down direction and left-right direction of an image (the letters "A" to "L" in the example of Fig. 2) represented by the Web data (text data, image data etc.) is usually predetermined. In the present embodiment, left to right is arranged in the sequence "A", "B", "C" and up to down is arranged in the sequence "A", "D", "G", "J". That is, the up-down direction of Fig. 2 is the up-down direction of the image, and the left-right direction of Fig. 2 is the left-right direction of the image. In S6, the display controlling unit 30 creates image data for vertical orientation such that the up-down direction of the image represented by Web data is along the long side of the display 12, and the left-right direction of the image is along the short side of the display 12. Furthermore, in the present embodiment, the image data for vertical orientation is created such that the entire length in the left-right direction of an image 80 shown in the display 12 (the length from the left edge of "A" to the right edge of "C") is approximately equal to the length of the short side of the display 12.

In S6, the display controlling unit 30 further supplies the image data for vertical orientation to the display 12. Consequently, as shown in the upper figure of Fig. 2, the image 80 including the letters is shown in the display 12. Furthermore, if the user scrolls the display of the display 12 downward, instead of the letters "A" to "L", another image arranged below the letters "A" to "L" in the image data is shown in the display 12. When S6 ends, the process proceeds to S9.

In a case of NO in S4 (the case of being closer to the horizontal orientation), in S8 the display controlling unit 30 creates BMP format RGB image data for horizontal orientation using the HTML format Web data obtained in S2. In S8, the display controlling unit 30 creates the image data for horizontal orientation such that the up-down direction of the image represented by the Web data is along the short side of the display 12, and the left-right direction of the image is along the long side of the display 12. In S8, the display controlling unit 30 further supplies the image data for horizontal orientation to the display 12. Consequently, as shown in the lower figure of Fig. 2, an image 90 containing the letters is shown in the display 12.

Furthermore, in the present embodiment, the image data for horizontal orientation is created such that the entire length in the left-right direction of the image 90 shown in the display 12 (the length from the left edge of "A" to the right edge of "C") is approximately equal to the length of the long side of the display 12. Naturally, the long side of the display 12 is longer than the short side of the display 12. Consequently, the size of a partial image (e.g., the single letter "A") that constitutes the image 90 represented by the image data for horizontal orientation is greater than the size of the same partial image that constitutes the image 80 represented by the image data for vertical orientation. Therefore, as shown in the upper figure of Fig. 2, in a case where the image data for vertical orientation is supplied to the display 12, the letters "A" to "L" are shown whereas, as shown in the lower figure of Fig. 2, in a case where the image data for horizontal orientation is supplied to the display 12, only the letters "A" to "F" are shown. Furthermore, in a variant embodiment, the size of the partial image that constitutes the image 90 represented by the image data for horizontal orientation may be the same as the size of the partial image constituting the image 80 represented by the image data for vertical orientation. When S8 ends, the process proceeds to S9.

In S9, the display controlling unit 30 determines whether an operation has been performed to end the displaying of the images 80, 90 represented by the Web data in the display 12. In a case of NO here, the display controlling unit 30 returns to S4, and monitors whether the posture of the mobile terminal device 10 has changed. For example, in a case where the posture of the mobile terminal device 10 has changed from the vertical to horizontal orientation, the display controlling unit 30 determines NO in S4, creates the image data for horizontal orientation in S8, and supplies that image data to the display 12. Further, e.g., in a case where the posture of the mobile terminal device 10 has changed from horizontal to vertical orientation, the display controlling unit 30 determines YES in S4, creates the image data for vertical orientation in S6, and supplies that image data to the display 12. That is, the mobile terminal device 10 switches the direction of the images 80, 90 relative to the display 12 in accordance with the posture of the mobile terminal device 10. Furthermore, in a case of YES in S9, the displaying of the images 80, 90 represented by the Web data ends.

### (Processes performed in accordance with print application 28)

Next, the contents of processes performed in accordance with the print application 28 will be described with reference to Fig. 3. In a state where the images 80, 90 represented by the Web data are being shown in the display 12, as shown in the upper or lower figure of Fig. 2, the user can instruct the mobile terminal device 10 to initiate the print application 28 by operating the display 12. In this case, the process of Fig. 3 starts.

### (Preview image display process)

First, in S10, the display data creation unit 44 (see Fig. 1) performs a preview image display process. Fig. 4 shows a flowchart of the preview image display process. In S42, the display data creation unit 44 determines the posture of the mobile terminal device 10. In a case where the mobile terminal device 10 is vertically oriented, the display data creation unit 44 determines YES in S42, and proceeds to S44. In S44, the display data creation unit 44 creates preview image data for vertical orientation that represents a preview image indicating the result of portrait print (i.e., printing where a left-right direction of an image of a print target is along a short side of a print medium) of the image 80 represented by the Web data (see Fig. 2), and supplies the preview image data to the display 12. Consequently, a preview image 100 is shown in the display 12. The preview image 100 shows a border 102 of the print medium and an image 104 (i.e., the letters "A" to "L") corresponding to the image 80 represented by the Web data.

The contents of the process S44 will be described more specifically. Since the print condition has not yet been selected by the user at the stage of S44, the display data creation unit 44 creates the preview image data using a print condition that was determined in advance (called "predetermined print condition" below). In the present embodiment, the predetermined print condition is color print using A4 size print medium. Consequently, the display data creation unit 44 creates the preview image data such that the aspect ratio of the border 102 in the preview image 100 is 1: square root of 2, which is the aspect ratio of A4 size. Further, the display data creation unit 44 creates the preview image data such that the image 104 in the preview image 100 is a color image. Furthermore, in the present embodiment, a predetermined margin size is adopted as the predetermined print condition. The margin size of both edges of the short side of the print medium is 1/10 smaller than the length of the short side of the print medium. Consequently, the entire length of the image 104 in the left-right direction (the length from the left edge of "A" to the right edge of "C") is approximately equal to the length of the short side of the border 102. Furthermore, in a variant embodiment, no margin may be adopted as the predetermined print condition. In this variant embodiment, the entire length of the image 104 in the left-right direction matches the length of the short side of the border 102. Furthermore, as with the margins in the short side direction, the margin size of both edges of the long side of the print medium is 1/10 smaller than the length of the long side of the print medium. Consequently, the entire length in the up-down direction of the image 104 (the length from the top edge of "A" to the bottom edge of "J") is approximately equal to the length of the long side of the border 102.

In S44, further, the display data creation unit 44 creates the preview image data such that the left-right direction of the preview image 100 is along the short side of the display 12 and the up-down direction of the preview image 100 is along the long side of the display 12. Furthermore, the left-right direction of the preview image 100 corresponds to the left-right direction of the image 104 in the preview image 100 (i.e., the direction in which "A", "B", "C" are aligned), and the up-down direction of the preview image 100 corresponds to the up-down direction of the image 104 in the preview image 100 (i.e., the direction in which "A", "D", "G", "J" are aligned). Further, in S44, the display data creation unit 44 creates the preview image data such that the entirety of the preview image 100 indicating the print result for one piece of print medium fits into the display 12. Furthermore, the display data creation unit 44 creates the preview image data such that the size of the entirety of the preview image 100 increases, as long as the entirety of the preview image 100 can fit into the display 12. When S44 ends, the preview image display process ends.

On the other hand, in a case where the mobile terminal device 10 is horizontally oriented, the display data creation unit 44 determines NO in S42, and proceeds to S46. In S46, the display data creation unit 44 creates preview image data for horizontal orientation that represents a preview image indicating the result of portrait print of the image 80 represented by the Web data (see Fig. 2), and supplies that preview image data to the display 12. Consequently, a preview image 110 is shown in the display 12. The preview image 110 shows a border 112 of the print medium and an image 114 (i.e., the letters "A" to "L") corresponding to the image 80 represented by the Web data.

In S46, as in S44, the display data creation unit 44 creates the preview image data using the predetermined print condition. Consequently, the aspect ratio of the border 112 in the preview image 110 is 1: square root of 2, and the image 114 in the preview image 110 is a color image. In S46, further, the display data creation unit 44 creates the preview image data such that the left-right direction of the preview image 110 (i.e., the direction in which "A", "B", "C" are aligned) is along the long side of the display 12, and the up-down direction of the preview image 110 (i.e., the direction in which "A", "D", "G", "J" are aligned) is along the short side of the display 12. Other points are the same as in S44. When S46 ends, the preview image display process ends.

As described above, in the present embodiment, since the preview image display process is performed, the user can check the print result before the images 80, 90 shown in the display 12 are actually printed. In particular, since the preview image 100, etc. is shown, the user can check the preview image 100, etc. well before setting the print condition (i.e., immediately after the print application 28 was initiated). Further, since the entirety of the preview image 100, etc. corresponding to one piece of print medium is shown so as to fit into the display 12, it is easy for the user to check the preview image 100, etc.

### (Process following the preview image display process)

When the preview image display process ends, the process proceeds to S12 of Fig. 3. In S12, the controlling unit 20 sends a search packet to the network 50 (see Fig. 1). Consequently, the printer 60 connected with the network 50 sends a response packet to the mobile terminal device 10. In a case where another printer (not shown) is also connected with the network 50, that other printer also sends a response packet to the mobile terminal device 10. The response packet includes a node name, IP address, etc. of the source printer. The controlling unit 20 displays the node names of the printers in the display 12. The user can select the node name of one printer by operating the display 12. In this case, the controlling unit 20 determines YES in S14, and proceeds to S16. In the present embodiment, the description below will continue using the case of the node name of the printer 60 being selected.

In S16, the controlling unit 20 asks the printer 60 for the print condition executable by the printer 60. Consequently, the controlling unit 20 obtains information indicating the print condition executable by the printer 60. Furthermore, the print condition executable by the printer 60 includes, e.g., size of print medium (A4 size, Letter size, etc.), type of print medium (normal paper, glossy paper etc.), print color (color print, monochrome print), capability of duplex print, etc.

Next, in S18, the controlling unit 20 displays the print condition executable by the printer 60 in the display 12 based on the information obtained in S16. By operating the display 12, the user can set (i.e., select) the desired print condition. In this case, the controlling unit 20 determines YES in S20, and proceeds to S22. Furthermore, in the present embodiment, the description below will continue using the case of "Letter size" being set as the size of the print medium, and "monochrome print" being set as the print color.

### (Preview image renewal process)

Next, the contents of the preview image renewal process of S22 will be described. Fig. 5 shows a flowchart of the preview image renewal process. In the case where the mobile terminal device 10 is vertically oriented, the display data creation unit 44 determines YES in S62, and proceeds to S64. Except for the point that the set print condition (i.e., monochrome print, Letter size) is used, the process S64 is the same as the process S44 of Fig. 4. As a result of the process S64, a preview image 200 is shown in the display 12 instead of the preview image 100 of Fig. 4. The aspect ratio of a border 202 in the preview image 200 is 8.5:11, which is the aspect ratio of Letter size, and an image 204 in the preview image 200 is a monochrome image. Furthermore, since the aspect ratio of the print medium changes, a part of the image 204 in the preview image 200 (the part having "J", "K", "L") is lost compared to the case of the preview image display process of Fig. 4. When S64 ends, the preview image renewal process ends.

In the case where the mobile terminal device 10 is horizontally oriented, the display data creation unit 44 determines NO in S62, and proceeds to S66. Except for the point that the set print condition (i.e., monochrome print, Letter size) is used, the process S66 is the same as the process S46 of Fig. 4. The result of the process S66, which is shown in the display 12 instead of the preview image 110 of Fig. 4, is a preview image 210 indicating a border 212 having the aspect ratio 8.5:11 and an image 214 which is a monochrome image. When S66 ends, the preview image renewal process ends.

In the present embodiment, as described above, since the preview image renewal process is performed, in a case e.g. where monochrome print has been set by the user, the preview image 200, etc. indicating the print result monochrome print is displayed. Further, in a case e.g. where the size of the print medium (e.g., Letter size) has been set by the user, the preview image 200, etc. corresponding to the aspect ratio of that size is displayed. The user can check the preview image 200, etc. indicating the print result that corresponds to his desired print condition.

### (Process following the preview image renewal process)

When the preview image renewal process ends, the process proceeds to S24 of Fig. 3. In S24, the controlling unit 20 monitors whether print start has been instructed by the user. After seeing the preview image 200, etc. shown in the preview image renewal process of Fig. 5, the user can instruct print start by operating the display 12. In this case, the controlling unit 20 determines YES in S24, and proceeds to S28. Furthermore, the user can change the posture of the mobile terminal device 10 before instructing print start. The controlling unit 20 monitors whether the posture of the mobile terminal device 10 has changed (i.e., changed from closer-to-vertically-oriented state to closer-to-horizontally-oriented state, or changed from closer-to-horizontally-oriented state to closer-to-vertically-oriented state) (S26). In a case of YES here, the display data creation unit 44 performs the preview image renewal process of S22 (see Fig. 5) again. Consequently, in a case e.g. where the posture changed from the vertical to the horizontal orientation, the preview image 210 is newly displayed instead of the preview image 200.

### (Print data creation process)

Next, the contents of the print data creation process of S28 will be described. Fig. 6 shows a flowchart of the print data creation process. In S82, the print data creation unit 40 creates print data for portrait print. Further, in S82, the sending unit 42 sends the print data for portrait print with the IP address of the printer 60 obtained in S12 of Fig. 3 as the destination. Consequently, the printer 60 prints an image 302 on a print medium 300 using the print data for portrait print.

The contents of the process S82 will be described in detail. The printer 60 is usually capable of interpreting JPEG format data. Consequently, in the present embodiment, the print data creation unit 40 creates RGB bitmap data using the Web data obtained in S2 of Fig. 2, and creates JPEG format print data by compressing the bitmap data.

Further, the print data creation unit 40 creates the print data for portrait print utilizing the set print condition (i.e., monochrome print, Letter size). That is, for the printer 60 to perform the monochrome print, the print data creation unit 40 creates bitmap data such that the RGB values of the pixels constituting the bitmap data are identical. Further, for the printer 60 to perform printing on a Letter size print medium, the print data creation unit 40 creates the bitmap data having a number of pixels corresponding to the length of the short side and the length of the long side of the Letter size print medium. Further, for the printer 60 to perform a portrait print of the image 80 represented by the Web data (see Fig. 2), the print data creation unit 40 creates the bitmap data such that the left-right direction of the image 302 to be printed (i.e., the direction in which "A", "B", "C" are aligned) is along the short side of the print medium, and the up-down direction of the image 302 (i.e., the direction in which "A", "D", "G", "H" are aligned) is along the long side of the print medium. Furthermore, the print data creation unit 40 creates the bitmap data utilizing the predetermined margin size. The margin size here is the same as the case of the preview image (e.g., the margin size of the short side direction is smaller than 1/10 of the length of the short side). Consequently, the entire length of the image 302 in the left-right direction (the length from the left edge of "A" to the right edge of "C") is approximately equal to the length of the short side of the print medium 300. Furthermore, in a variant embodiment, no margin may be adopted. In this variant embodiment, the entire length of the image 302 in the left-right direction is equal to the length of the short side of the print medium 300. When S82 ends, the print data creation process ends.

### (Result of the present embodiment)

Fig. 7 shows how the image shown in the display 12 and the image printed on the print medium 300 change in accordance with the posture of the mobile terminal device 10. Furthermore, of the figures in Fig. 7, the figures corresponding to "portrait print fix mode" are realized in the first embodiment. The "display dependent mode" in Fig. 7 is utilized in a second embodiment described below. When initiation of the print application 28 is instructed with the mobile terminal device 10 being in the vertically oriented state, the preview image 100 is displayed (S44 of Fig. 4). Next, when the print condition is set, the preview image 200 is displayed (S64 of Fig. 5), and when print start is instructed, the portrait print on the print medium 300 is performed (S82 of Fig. 6). Further, when the initiation of the print application 28 is instructed with the mobile terminal device 10 being in a horizontally oriented state, the preview image 110 is displayed (S46 of Fig. 4). Next, when the print condition is set, the preview image 210 is displayed (S66 of Fig. 5), and when print start is instructed, the portrait print on the print medium 300 is performed (S82 of Fig. 6). That is, in the present embodiment, the portrait print is performed when the initiation of the print application 28 is instructed both in the state of the mobile terminal device 10 being vertically oriented and in the state of the mobile terminal device 10 being horizontally oriented.

For example, a configuration (called "comparative example mobile terminal device" below) is conceivable in which the printer 60 performs a portrait print in a case where the initiation of the print application 28 is instructed when the mobile terminal device 10 is in the vertically oriented state, and the printer 60 performs a landscape print (i.e., printing in which the left-right direction of the image of the print target is along the long side of the print medium) in a case where the initiation of the print application 28 is instructed when the mobile terminal device 10 is in the horizontally oriented state. In the comparative example mobile terminal device, the direction of the image relative to the print medium changes in accordance with the direction of the image relative to the display. Consequently, e.g., if the user instructs printing of a first image displayed when the comparative example mobile terminal device is in the vertically oriented state, and then instructs printing of a second image displayed when the comparative example mobile terminal device is in the horizontally oriented state, a first print medium (i.e., a portrait printout) can be obtained in which the left-right direction of the first image is along the short side, and a second print medium (i.e., a landscape printout) can be obtained in which the left-right direction of the second image is along the long side. For example, in a case where the first image is a top-level Web page (e.g., a top page), and the second image is a lower-level Web page linked from the top-level Web page, the direction of the top-level Web page relative to the first print medium differs from the direction of the lower-level Web page relative to the second print medium. That is, in the comparative example mobile terminal device, the direction of the image relative to the print medium is different in the first print medium and the second print medium, and the user obtains printouts which do not give him/her a standardized impression.

By contrast, in the mobile terminal device 10 of the present embodiment, the print medium 300 can be obtained in which the left-right direction of the image 80, etc. is along the short side, in both cases where the printing is instructed of the image 80 (see Fig. 2) that is shown in the mobile terminal device 10 in the vertically oriented state, and where the printing is instructed of the image 90 (see Fig. 2) that is shown in the mobile terminal device 10 in the horizontally oriented state. That is, the portrait print is performed regardless of the direction of the image 80, etc. relative to the display 12. Consequently, the user can obtain printouts which give him/her a standardized impression. In particular, since the left-right direction of the image 80, etc. is along the short side of the print medium 300; i.e., the up-down direction of the image 80, etc. is along the long side of the print medium 300, the number of pages of print medium needed for printing can be reduced compared to the configuration in which the left-right direction of the image 80, etc. is along the long side of the print medium 300 (landscape print). Further, the Web data, which is the printing target in the present embodiment, is likely to have a comparatively long data configuration in its up-down direction. Consequently, there is a clear reduction in the number of pages of print medium needed for printing. Further, in the present embodiment, since the entire length of the image 80, etc. in the left-right direction is approximately equal to the length of the short side of the print medium 300, the situation can be prevented where the entire length of the image 80, etc. in the left-right direction is significantly smaller than the length of the short side of the print medium 300 (i.e., the image 80, etc. is printed significantly smaller than the print medium). According to the present embodiment, the user can obtain an appropriate printout even if printing is instructed on the portable type terminal device 10 in which the direction of the image 80, etc. relative to the display 12 can be switched.

The "Web data" obtained in S2 of Fig. 2 is an example of the "specific data". In Fig. 7, examples of the "first case" and the "second case" are respectively the situation where the print application 28 is initiated in the state where the image 80 is shown, and the situation where the print application 28 is initiated in the state where the image 90 is shown. Further, the print data created in S82 of Fig. 6 is an example of the "first type of print data". Further, the preview image 100 and the preview image 110 of Fig. 4, and the preview image 200 of Fig. 5 are respectively examples of the "first type of a preview image", "second type of a preview image", and "third type of a preview image".

### (Second embodiment)

The description will focus on points differing from the first embodiment. In the present embodiment, there are two modes for causing the printer 60 to print using the print application 28. One of the modes (called "portrait print fix mode" below) is a mode for causing the printer 60 to print a portrait print regardless of the direction of the image relative to the display 12 (i.e., the posture of the mobile terminal device 10). The other of the modes (called "display dependent mode" below) is a mode for causing the printer 60 to print either the portrait print or the landscape print according to the direction of the image relative to the display 12 (i.e., the posture of the mobile terminal device 10). The user can select one mode out of the portrait print fix mode and the display dependent mode by operating (touching) the display 12. Information indicating the mode selected by the user is stored in a memory (not shown) in the controlling unit 20.

### (Preview image display process)

In the present embodiment, the contents of the preview image display process (Fig. 4) performed in S10 of Fig. 3 differ from the first embodiment. Fig. 8 shows a flowchart of the preview image display process of the present embodiment. In S40, the display data creation unit 44 reads the information in memory (not shown) to determine which mode, of the portrait print fix mode and the display dependent mode, has been selected by the user. In a case where the portrait print fix mode has been selected, the display data creation unit 44 determines YES in S40, and proceeds to S42. Further, in a case where the display dependent mode has been selected, the display data creation unit 44 determines NO in S40, and proceeds to S48. S42 to S46, which are performed in the case of the portrait print fix mode, are the same as S42 to S46 of Fig. 4 of the first embodiment.

### (Display dependent mode)

In S48, the display data creation unit 44 determines the posture of the mobile terminal device 10. In the case where the mobile terminal device 10 is vertically oriented, the display data creation unit 44 determines YES in S48, and proceeds to S44. In the case where the mobile terminal device 10 is horizontally oriented, the display data creation unit 44 determines NO in S48, and proceeds to S50. In S50, the display data creation unit 44 creates preview image data for horizontal orientation that represents a preview image indicating the result of landscape print of the image 90 represented by the Web data (see Fig. 2), and supplies the preview image data to the display 12. Consequently, a preview image 120 is shown in the display 12. The preview image 120 shows a border 122 of the print medium and an image 124 (i.e., the letters "A" to "F") corresponding to the image 90 represented by the Web data.

In S50, as with S44, the display data creation unit 44 creates the preview image data using the predetermined print condition (color print using A4 print medium). Consequently, the aspect ratio of the border 122 in the preview image 120 is 1: square root of 2, and the image 124 in the preview image 120 is a color image. In S50, further, the display data creation unit 44 creates the preview image data such that the left-right direction of the preview image 120 (i.e., the direction in which "A", "B", "C" are aligned) is along the long side of the display 12, and the up-down direction of the preview image 120 (i.e., the direction in which "A", "D" are aligned) is along the short side of the display 12. Furthermore, in the present embodiment, the predetermined margin size is adopted as the predetermined print condition. Consequently, the entire length of the image 124 in the left-right direction (the length from the left edge of "A" to the right edge of "C") is approximately equal to the length of the long side of the border 122. Consequently, the entire length of the image 124 in the left-right direction in the preview image 120 is greater than the entire length of the image 104 in the left-right direction in the preview image 100 shown in S44. Consequently, the size of a partial image (e.g., the single letter "A") that constitutes the image 124 in the preview image 120 is greater than the size of the same partial image that constitutes the image 104 in the preview image 100. Other points are the same as S44. When S50 ends, the preview image display process ends.

### (Preview image renewal process)

In the present embodiment, the contents of the preview image renewal process performed in S22 of Fig. 3 differ from the first embodiment. Fig. 9 shows a flowchart of the preview image renewal process of the present embodiment. In S60, the display data creation unit 44 determines which mode, of the portrait print fix mode and the display dependent mode, has been selected by the user. In a case where the portrait print fix mode has been selected, the display data creation unit 44 determines YES in S60, and proceeds to S62. Further, in a case where the display dependent mode has been selected, the display data creation unit 44 determines NO in S60, and proceeds to S68. S62 to S66, which are performed in the case of the portrait print fix mode, are the same as S62 to S66 of Fig. 5 of the first embodiment.

### (Display dependent mode)

In S68, the display data creation unit 44 determines the posture of the mobile terminal device 10. In the case where the mobile terminal device 10 is vertically oriented, the display data creation unit 44 determines YES in S68, and proceeds to S64. In the case where the mobile terminal device 10 is horizontally oriented, the display data creation unit 44 determines NO in S68, and proceeds to S70. Except for the point that the set print condition (i.e., monochrome print, Letter size) is used, the process S70 is the same as the process S50 of Fig. 8. As a result of the process S70, a preview image 220 is shown in the display 12 instead of the preview image 120 of Fig. 8. The preview image 220 has a border 222 with the aspect ratio 8. 5:11, and an image 224 which is a monochrome image. Furthermore, since the aspect ratio of the print medium changes, a part of the image 224 in the preview image 220 (the part having "C", "F") is lost compared to the case of the preview image display process of Fig. 8. When S70 ends, the preview image renewal process ends.

### (Print data creation process)

In the present embodiment, the contents of the print data creation process performed in S28 of Fig. 3 differ from the first embodiment. Fig. 10 shows a flowchart of the print data creation process of the present embodiment. In S80, the print data creation unit 40 (see Fig. 1) determines which mode, of the portrait print fix mode and the display dependent mode, has been selected by the user. In the case where the portrait print fix mode has been selected, the print data creation unit 40 determines YES in S80, and proceeds to S82. S82, which is performed in the case where the portrait print fix mode has been selected, is the same as S82 of Fig. 6 of the first embodiment. Further, in the case where the display dependent mode has been selected, the print data creation unit 40 determines NO in S80, and proceeds to S84.

### (Display dependent mode)

In S84, the print data creation unit 40 determines the posture of the mobile terminal device 10. In the case where the mobile terminal device 10 is vertically oriented, the print data creation unit 40 determines YES in S84, and proceeds to S82. Consequently, the printer 60 performs a portrait print of the image 302 on the print medium 300. In the case where the mobile terminal device 10 is horizontally oriented, the print data creation unit 40 determines NO in S84, and proceeds to S86. In the process S86, the print data creation unit 40 creates print data for landscape print. Further, in S86, the sending unit 42 sends the print data for landscape print, with the IP address of the printer 60 obtained in S12 of Fig. 3 as the destination. Consequently, the printer 60 prints an image 402 on the print medium 300 utilizing the print data for landscape print.

The process S86 is fundamentally the same as the process S82. However, in order to cause the printer 60 to perform a landscape print of the image 90 represented by the Web data (see Fig. 2), the print data creation unit 40 creates bitmap data such that the left-right direction of the image 402 to be printed (i.e., the direction in which "A", "B", "C" are aligned) is along the long side of the print medium, and the up-down direction of the image 402 (i.e., the direction in which "A", "D" are aligned) is along the short side of the print medium. Furthermore, as with the process S82, since the predetermined margin is used, the entire length of the image 402 in the left-right direction (the length from the left edge of "A" to the right edge of "C") is approximately equal to the length of the long side of the print medium 300. Of course, the length of the long side of the print medium 300 is longer than the length of the short side of the print medium 300. Consequently, the entire length in the left-right direction of the image 402 obtained by landscape printing is longer than the entire length in the left-right direction of the image 302 obtained by portrait printing. Consequently, the size of the partial image (e.g., the single letter "A") that constitutes the image 402 is greater than the size of the same partialimage that constitutes the image 302.

Furthermore, in the print data created in S86, since the size of each partial image (each letter "A" etc.) is larger, only "A" to "F" is printed on the one piece of print medium 300, and "G" to "L" is not printed. Consequently, in S86, the print data creation unit 40 further creates print data for printing "G" to "L" on another piece of print medium. That is, the number of pieces of print medium required is greater in performing the process S86 than in performing the process S82. When S86 ends, the print data creation process ends.

### (Result of the present embodiment)

As shown in Fig. 7, in the display dependent mode, when the print application 28 is initiated when the mobile terminal device 10 is in the vertically oriented state, the preview image 100 is displayed (S44 of Fig. 8). Next, when the print condition is set, the preview image 200 is displayed (S64 of Fig. 9), and when print start is instructed, the portrait print is performed on the print medium 300 (S82 of Fig. 10). Further, in the display dependent mode, when the mobile terminal device 10 is in the horizontally oriented state when the initiation of the print application 28 is instructed, the preview image 120 is displayed (S50 of Fig. 8). Next, when the print condition is set, the preview image 220 is displayed (S70 of Fig. 9), and when print start is instructed, the landscape print is performed on the print medium 300 (S86 of Fig. 10). That is, in the display dependent mode, the printing can be switched between portrait print and landscape print when the initiation of the print application 28 is instructed, in accordance with the terminal device 10 having been in the vertically oriented state or the horizontally oriented state at the time of the instruction.

In the present embodiment, not only the portrait print fix mode but also the display dependent mode is adopted. Since the user can select the mode, the user can obtain the printout he/she desires. Furthermore, in the present embodiment, the print data created in S86 of Fig. 10 is an example of the "second type of the print data".

### (Variant embodiment 1)

In the above embodiments, HTML was adopted as the data format of the "specific data". However, XHTML format Web data, JPEG format data, BMP format data, etc. may be adopted instead.

### (Variant embodiment 2)

In the above embodiments, JPEG was adopted as the data format of the "print data". However, PS (Post Script), XPS, PDF, etc. may be adopted instead. Generally speaking, the print data may have any format that the printer is capable of interpreting. Furthermore, the print data creation unit 40 may create any print data that has a format that the printer 60 is capable of interpreting, this format being obtained as a result of an inquiry to the printer 60.

### (Variant embodiment 3)

In the above embodiments, the display controlling unit 30 switches the direction of the image relative to the display 12 in accordance with the posture of the mobile terminal device 10. However, instead, the display controlling unit 30 may switch the direction of the image relative to the display 12 in a case where a predetermined button is operated. Further, the display controlling unit 30 may switch the direction of the image relative to the display 12 in a case where the display 12 moves (e.g., rotates) relative to the main body.

### (Variant embodiment 4)

Furthermore, in the above embodiments, the predetermined print condition adopted e.g. in S44 of Fig. 4, etc. is a color print using A4 size print medium. However, instead, the controlling unit 20 may store the print condition each time the print condition is set by the user, and may adopt this most recently set print condition as the predetermined print condition in S44 of Fig. 4, etc.

### (Variant embodiment 5)

Furthermore, the functions of the units taught in the present specification (e.g., the display controlling unit 30, the print data creation unit 40, the sending unit 42, the display data creation unit 44) may be realized by software 26, 28, as shown in the embodiment, or instead may be realized by hardware such as a logic circuit.

## Claims

1. A print application (28) for a portable type terminal device (10), the portable type terminal device comprising: a display (12) having a rectangular shape defined by a long side (L2) along a first direction and a short side (L1) along a second direction, the second direction being perpendicular to the first direction, the portable type terminal device (10) being configured to: access a Web server (72) on the Internet so as to obtain Web data from the Web server (72); in a case where the terminal device (10) is in a vertically oriented posture in which the long side (L2) of the display (12) extends along a perpendicular direction relative to the ground surface, display an image (80) represented by image data for vertical orientation and which is included in an image represented by the Web data, wherein if a user scrolls the display (12) downward, another image represented by image data for vertical orientation and included in the image represented by the Web data is shown in the display (12); and in a case where the terminal device (10) is in a horizontally oriented posture in which the short side (L1) of the display (12) extends along a perpendicular direction relative to the ground surface, display, differently from the image (80) represented by image data for vertical orientation and displayed in the case of the terminal device (10) being the vertically oriented posture, an image (90) represented by image data for horizontal orientation and which is included in the image represented by the Web data: wherein the print application (28) , when executed by the portable type terminal device, causes the realization of:
a display data creation unit (44) configured to create first or second types of display data representing respective preview images (100, 110, 200, 210) indicating print results of the image represented by the Web data so as to supply the display data to the display (12),
wherein in the case of the terminal device (10) being in the vertically oriented posture, the display data creation unit (44) supplies the first type of the display data for causing a first type of the preview image (200) indicating a print result of one piece of a print medium to be shown in the display (12), the first type of preview image (200) indicates a first border (202) of the print medium and a first image (204) which is part of the image represented by the Web data, a left-right direction of the first type of preview image (200) is along the short side (L1) of the display (12), and an up-down direction of the first type of preview image (200) is along the long side (L2) of the display 12, the first type of the display data being data for causing an entirety of the first type of the preview image (100) to be simultaneously shown in the display (12),
wherein in the case of the terminal device (10) being in the horizontally oriented posture, the display data creation unit (44) supplies the second type of the display data for causing a second type of the preview image (210) indicating a print result of one piece of a print medium to be shown in the display (12), the second type of preview image (210) indicating a second border (212) of the print medium and a second image (214) which is part of the image represented by the Web data, the left-right direction of the second type of preview image (210) is along the long side (L2) of the display (12), and the up-down direction of the second type of preview image (210) is along the short side (L1) of the display (12), the second type of the display data being data for causing an entirety of the second type of the preview image (110) to be simultaneously shown in the display (12),
wherein an aspect ratio of the first border (202) indicated by the first type of preview image (200) is same as an aspect ratio of the second border (212) indicated by the second type of preview image (210), and
wherein the first image (204) included within the first border (202) indicated by the first type of preview image (200) is the same as the second image (214) included within the second border (212) indicated by the second type of preview image (210) and is a same specific image (204, 214); and
a print data creation unit (40) configured to create print data by utilizing the Web data in a case where a print is instructed under a state where the first type of preview image (200) or the second type of preview image (210) is shown in the display (12), the print data having a format that a printer (60) is capable of interpreting; and
a sending unit (42) configured to send the print data to the printer (60),
wherein, in both of a first case where the print of the specific image (204, 214) is instructed under the state where the first type of preview image (200) is shown in the display (12) and a second case where the print of the specific image (204, 214) is instructed under the state where the second type of preview image (210) is shown in the display (12), the print data creation unit (40) creates a first type of the print data for causing the printer (60) to perform a first type of a print, and
in the first type of the print, the left-right direction of the specific image (204, 214) is along a short side of a print medium (300), and an entire length of the specific image (204, 214) in the left-right direction corresponds to the short side of the print medium (300).

2. The print application (28) as in claim 1, wherein
in a case where the posture of the terminal device (10) is changed from the vertically oriented posture to the horizontally oriented posture, the display data creation unit (44) supplies the second type of the display data for causing the second type of preview image (210) to be shown in the display (12), and
in a case where the posture of the terminal device (10) is changed from the horizontally oriented posture to the vertically oriented posture, the display data creation unit (44) supplies the first type of the display data for causing the first type of preview image (200) to be shown in the display (12).

3. The print application (28) as in claim 1 or 2, wherein
after a print condition is set by the user, in the case of the terminal device (10) being the vertically oriented posture, the display data creation unit (44) creates the first type of display data so as to supply the first type of the display data to the display (12), the first type of preview image (200) indicating a print result of the specific image (204) in accordance with the set print condition, and
after the print condition is set by the user, in the case of the terminal device (10) being the horizontally oriented posture, the display data creation unit (44) creates the second type of display data so as to supply the second type of display data to the display (12), the second type of preview image (200) indicating a print result of the specific image (214) in accordance with the set print condition.

4. The print application (28) as in claim 3, wherein
before the print condition is set by the user, the display data creation unit (44) creates the display data by utilizing a size of a predetermined print medium, and
after the print condition is set by the user, in the case of the terminal device (10) being the vertically oriented posture, the display data creation unit (44) creates the first type of display data by utilizing a size of a print medium set as the print condition, and
after the print condition is set by the user, in the case of the terminal device (10) being the horizontally oriented posture, the display data creation unit (44) creates the second type of display data by utilizing the size of the print medium set as the print condition.

5. The print application (28) as in any one of claims 1 to 4, wherein
in a state where a first mode has been selected by the user, the print data creation unit (40) creates the first type of the print data in both of the first case and the second case,
in a state where a second mode has been selected by the user, the print data creation unit (40) creates the first type of the print data in the first case, and creates a second type of the print data for causing the printer (60) to perform a second type of a print in the second case, and
in the second type of the print, the up-down direction of an printed image (402) is along the short side of the print medium (300).

6. The print application (28) as in any one of claims 1 to 5, wherein
the Web data is HTML data.

7. A non-transitory computer readable storage medium storing the print application (28) as in any one of claims 1 to 6.

8. A portable type terminal device (10) comprising:
a display (12) having a rectangular shape defined by a long side (L2) along a first direction and a short side (L1) along a second direction, the second direction being perpendicular to the first direction; wherein
the portable type terminal device (10) is configured to:
access a Web server (72) on the Internet so as to obtain Web data from the Web server (72);
in a case where the terminal device (10) is in a vertically oriented posture in which the long side (L2) of the display (12) extends along a perpendicular direction relative to the ground surface, display an image (80) represented by image data for vertical orientation, wherein if a user scrolls the display (12) downward, another image represented by image data for vertical orientation is shown in the display (12); and
in a case where the terminal device (10) is in a horizontally oriented posture in which the short side (L1) of the display (12) extends along a perpendicular direction relative to the ground surface, display, differently from the image (80) represented by image data for vertical orientation displayed in the case of the terminal device (10) being the vertically oriented posture, an image (90) represented by image data for horizontal orientation; wherein
said image (80) represented by image data for vertical orientation, said another image represented by image data for vertical orientation, and said image (90) represented by image data for horizontal orientation respectively are included in an image represented by the Web data; and
the portable type terminal device (10) further comprises a controlling device realized by the print application (28) as in any one of claims 1 to 6.

9. A controlling method for a portable type terminal device (10) comprising a display (12) having a rectangular shape defined by a long side (L2) along a first direction and a short side (L1) along a second direction, the second direction being perpendicular to the first direction, the portable type terminal device (10) being configured to access a Web server (72) on the Internet so as to obtain Web data from the Web server (72), in a case where the terminal device (10) is in a vertically oriented posture in which the long side (L2) of the display (12) extends along a perpendicular direction relative to the ground surface, display an image (80) represented by image data for vertical orientation which is included in an image represented by the Web data, wherein if a user scrolls the display (12) downward, another image represented by image data for vertical orientation and included in the image represented by the Web data is shown in the display (12), and, in a case where the terminal device (10) is in a horizontally oriented posture in which the short side (L1) of the display (12) extends along a perpendicular direction relative to the ground surface, display, differently from the image (80) represented by image data for vertical orientation displayed in the case of the terminal device (10) being the vertically oriented posture, an image (90) represented by image data for horizontal orientation and which is included in the image represented by the Web data, the method comprising:
creating display data representing first or second types of preview images (100, 110, 200, 210) indicating print results of the image represented by the Web data so as to supply the display data to the display (12),
in the case of the terminal device (10) being in the vertically oriented posture, supplying the first type of the display data for causing a first type of the preview image (200) indicating a print result of one piece of a print medium to be shown in the display (12), the first type of preview image (200) indicates a first border (202) of the print medium and a first image (204) which is part of the image represented by the Web data, a left-right direction of the first type of preview image (200) is along the short side (L1) of the display (12), and an up-down direction of the first type of preview image (200) is along the long side (L2) of the display 12, the first type of the display data being data for causing an entirety of the first type of the preview image (100) to be simultaneously shown in the display (12),
in the case of the terminal device (10) being in the horizontally oriented posture, supplying the second type of the display data for causing a second type of the preview image (210) indicating a print result of one piece of a print medium to be shown in the display (12), the second type of preview image (210) indicating a second border (212) of the print medium and a second image (214) which is part of the image represented by the Web data, the left-right direction of the second type of preview image (210) is along the long side (L2) of the display (12), and the up-down direction of the second type of preview image (210) is along the short side (L1) of the display (12), the second type of the display data being data for causing an entirety of the second type of the preview image (110) to be simultaneously shown in the display (12),
wherein an aspect ratio of the first border (202) indicated by the first type of preview image (200) is same as an aspect ratio of the second border (212) indicated by the second type of preview image (210), and
wherein the first image (204) included within the first border (202) indicated by the first type of preview image (200) is the same as the second image (214) included within the second border (212) indicated by the second type of preview image (210) and is a same specific image (204, 214); and
creating print data by utilizing the Web data in a case where a print is instructed under a state where the first type of preview image (200) or the second type of preview image (210) is shown in the display (12), the print data having a format that a printer (60) is capable of interpreting; and
sending the print data to the printer (60),
wherein, in both of a first case where the print of the specific image (204, 214) is instructed under the state where the first type of preview image (200) is shown in the display (12) and a second case where the print of the specific image (204, 214) is instructed under the state where the second type of preview image (210) is shown in the display (12), the print data creation unit (40) creates a first type of the print data for causing the printer (60) to perform a first type of a print, and
in the first type of the print, the left-right direction of the specific image (204, 214) is along a short side of a print medium (300), and an entire length of the specific image (204, 214) in the left-right direction corresponds to the short side of the print medium (300).

## Patentansprüche

1. Druckanwendung (28) für ein tragbares Endgerät (10), wobei das tragbare Endgerät Folgendes umfasst:
ein Display (12) mit einer rechteckigen Form, die durch eine lange Seite (L2) entlang einer ersten Richtung und eine kurze Seite (L1) entlang einer zweiten Richtung definiert ist, wobei die zweite Richtung senkrecht zu der ersten Richtung ist, wobei das tragbare Endgerät (10) für Folgendes konfiguriert ist: Zugreifen auf einen Web-Server (72) im Internet, um Web-Daten von dem Web-Server (72) zu erhalten; in einem Fall, in dem das Endgerät (10) in einer vertikal ausgerichteten Haltung ist, in der sich die lange Seite (L2) des Displays (12) entlang einer senkrechten Richtung relativ zu der Bodenfläche erstreckt, Anzeigen eines Bilds (80), dargestellt durch Bilddaten zur vertikalen Ausrichtung und das in einem Bild beinhaltet ist, das durch die Web-Daten dargestellt ist, wobei, wenn ein Nutzer das Display (12) nach unten scrollt, ein anderes Bild, dargestellt durch Bilddaten zur vertikalen Ausrichtung und beinhaltet in dem Bild, dargestellt durch die Web-Daten, in dem Display (12) gezeigt wird; und in einem Fall, in dem das Endgerät (10) in einer horizontal ausgerichteten Haltung ist, in der sich die kurze Seite (L1) des Displays (12) entlang einer senkrechten Richtung relativ zu der Bodenfläche erstreckt, Anzeigen, anders als das Bild (80), dargestellt durch Bilddaten zur vertikalen Ausrichtung und angezeigt in dem Fall, dass das Endgerät (10) die vertikal ausgerichtete Haltung ist, eines Bilds (90), dargestellt durch Bilddaten zur horizontalen Ausrichtung und das in dem Bild beinhaltet ist, dargestellt durch die Web-Daten: wobei die Druckanwendung (28), wenn sie durch das tragbare Endgerät ausgeführt wird, die Realisierung von Folgendem verursacht:
einer Displaydaten-Erschaffungseinheit (44), die konfiguriert ist, um erste oder zweite Arten von Displaydaten zu erschaffen, die jeweilige Vorschaubilder (100, 110, 200, 210) darstellen, die Druckergebnisse des Bilds angeben, dargestellt durch die Web-Daten, um die Displaydaten dem Display (12) zuzuführen,
wobei, in dem Fall, dass das Endgerät (10) in der vertikal ausgerichteten Haltung ist, die Displaydaten-Erschaffungseinheit (44) die erste Art der Displaydaten zuführt, um zu verursachen, dass eine erste Art des Vorschaubilds (200) ein Druckergebnis von einem Teil eines Druckmediums angibt, das in dem Display (12) angezeigt werden soll, die erste Art Vorschaubild (200) eine erste Grenze (202) des Druckmediums und ein erstes Bild (204) angibt, das Teil des Bilds ist, dargestellt durch die Web-Daten, eine Links-rechts-Richtung der ersten Art Vorschaubild (200) entlang der kurzen Seite (L1) des Displays (12) ist und eine Oben-unten-Richtung der ersten Art Vorschaubild (200) entlang der langen Seite (L2) des Displays 12 ist, wobei die erste Art der Displaydaten Daten sind, um zu verursachen, dass eine Gesamtheit der ersten Art des Vorschaubilds (100) simultan in dem Display (12) gezeigt wird,
wobei, in dem Fall, dass das Endgerät (10) in der horizontal ausgerichteten Haltung ist, die Displaydaten-Erschaffungseinheit (44) die zweite Art der Displaydaten zuführt, um zu verursachen, dass eine zweite Art des Vorschaubilds (210) ein Druckergebnis von einem Teil eines Druckmediums angibt, das in dem Display (12) angezeigt werden soll, die zweite Art Vorschaubild (210) eine zweite Grenze (212) des Druckmediums und ein zweites Bild (214) angibt, das Teil des Bilds ist, dargestellt durch die Web-Daten, die Links-rechts-Richtung der zweiten Art Vorschaubild (210) entlang der langen Seite (L2) des Displays (12) ist und die Oben-unten-Richtung der zweiten Art Vorschaubild (210) entlang der kurzen Seite (L1) des Displays (12) ist, wobei die zweite Art der Displaydaten Daten sind, um zu verursachen, dass eine Gesamtheit der zweiten Art des Vorschaubilds (110) simultan in dem Display (12) gezeigt wird,
wobei ein Seitenverhältnis der ersten Grenze (202), angegeben durch die erste Art Vorschaubild (200), gleich wie ein Seitenverhältnis der zweiten Grenze (212) ist, angegeben durch die zweite Art Vorschaubild (210), und
wobei das erste Bild (204), das in der ersten Grenze (202) beinhaltet ist, angegeben durch die erste Art Vorschaubild (200), gleich wie das zweite Bild (214) ist, das in der zweiten Grenze (212) beinhaltet ist, angegeben durch die zweite Art Vorschaubild (210), und ein gleiches spezifisches Bild (204, 214) ist; und
einer Druckdaten-Erschaffungseinheit (40), die konfiguriert ist, um Druckdaten zu erschaffen durch Nutzen der Web-Daten in einem Fall, in dem ein Druck unter einem Zustand angewiesen wird, in dem die erste Art Vorschaubild (200) oder die zweite Art Vorschaubild (210) in dem Display (12) gezeigt wird, wobei die Druckdaten ein Format aufweisen, das ein Drucker (60) interpretieren kann; und
einer Sendeeinheit (42), die konfiguriert ist, um die Druckdaten an den Drucker (60) zu senden,
wobei in beiden aus einem ersten Fall, in dem der Druck des spezifischen Bilds (204, 214) unter dem Zustand angewiesen wird, in dem die erste Art Vorschaubild (200) in dem Display (12) gezeigt wird, und einem zweiten Fall, in dem der Druck des spezifischen Bilds (204, 214) unter dem Zustand angewiesen wird, in dem die zweite Art Vorschaubild (210) in dem Display (12) angezeigt wird, die Druckdaten-Erschaffungseinheit (40) eine erste Art der Druckdaten erschafft, um zu verursachen, dass der Drucker (60) eine erste Art eines Drucks durchführt, und
in der ersten Art des Drucks die Links-rechts-Richtung des spezifischen Bilds (204, 214) entlang einer kurzen Seite eines Druckmediums (300) ist, und eine Gesamtlänge des spezifischen Bilds (204, 214) in der Links-rechts-Richtung der kurzen Seite des Druckmediums (300) entspricht.

2. Druckanwendung (28) nach Anspruch 1, wobei
in einem Fall, in dem die Haltung des Endgeräts (10) von der vertikal ausgerichteten Haltung zu der horizontal ausgerichteten Haltung verändert wird, die Displaydaten-Erschaffungseinheit (44) die zweite Art der Displaydaten zuführt, um zu verursachen, dass die zweite Art Vorschaubild (210) in dem Display (12) gezeigt wird, und
in einem Fall, in dem die Haltung des Endgeräts (10) von der horizontal ausgerichteten Haltung zu der vertikal ausgerichteten Haltung verändert wird, die Displaydaten-Erschaffungseinheit (44) die erste Art der Displaydaten zuführt, um zu verursachen, dass die erste Art Vorschaubild (200) in dem Display (12) gezeigt wird.

3. Druckanwendung (28) nach Anspruch 1 oder 2, wobei
nachdem eine Druckbedingung durch den Nutzer eingestellt ist, in dem Fall, dass das Endgerät (10) in der vertikal ausgerichteten Haltung ist, die Displaydaten-Erschaffungseinheit (44) die erste Art von Displaydaten erschafft, um die erste Art der Displaydaten dem Display (12) zuzuführen, wobei die erste Art Vorschaubild (200) ein Druckergebnis des spezifischen Bilds (204) gemäß den eingestellten Druckbedingung angibt, und
nachdem die Druckbedingung durch den Nutzer eingestellt ist, in dem Fall, dass das Endgerät (10) in der horizontal ausgerichteten Haltung ist, die Displaydaten-Erschaffungseinheit (44) die zweite Art von Displaydaten erschafft, um die zweite Art der Displaydaten dem Display (12) zuzuführen, wobei die zweite Art Vorschaubild (200) ein Druckergebnis des spezifischen Bilds (214) gemäß den eingestellten Druckbedingung angibt.

4. Druckanwendung (28) nach Anspruch 3, wobei
bevor die Druckbedingung durch den Nutzer eingestellt wird, die Displaydaten-Erschaffungseinheit (44) die Displaydaten durch Nutzen einer Größe eines vorbestimmten Druckmediums erschafft, und
nachdem die Druckbedingung durch den Nutzer eingestellt wurde, in dem Fall, dass das Endgerät (10) in der vertikal ausgerichteten Haltung ist, die Displaydaten-Erschaffungseinheit (44) die erste Art von Displaydaten durch Nutzen einer Größe eines Druckmediums erschafft, die als die Druckbedingung eingestellt ist, und
nachdem die Druckbedingung durch den Nutzer eingestellt wurde, in dem Fall, dass das Endgerät (10) in der horizontal ausgerichteten Haltung ist, die Displaydaten-Erschaffungseinheit (44) die zweite Art von Displaydaten durch Nutzen einer Größe des Druckmediums erschafft, die als die Druckbedingung eingestellt ist.

5. Druckanwendung (28) nach einem der Ansprüche 1 bis 4, wobei
in einem Zustand, in dem ein erster Modus durch den Nutzer ausgewählt wurde, die Druckdaten-Erschaffungseinheit (40) die erste Art der Druckdaten in beiden des ersten Falls und des zweiten Falls erschafft,
in einem Zustand, in dem ein zweiter Modus durch den Nutzer ausgewählt wurde, die Druckdaten-Erschaffungseinheit (40) die erste Art der Druckdaten in dem ersten Fall erschafft und die zweite Art der Druckdaten erschafft, um zu verursachen, dass der Drucker (60) eine zweite Art eines Drucks in dem zweiten Fall durchführt, und
in der zweiten Art des Drucks die Oben-unten-Richtung eines gedruckten Bilds (402) entlang der kurzen Seite des Druckmediums (300) ist.

6. Druckanwendung (28) nach einem der Ansprüche 1 bis 5, wobei
die Web-Daten HTML-Daten sind.

7. Nichttransitorisches, computerlesbares Speichermedium, das die Druckanwendung (28) speichert, nach einem der Ansprüche 1 bis 6.

8. Tragbares Endgerät (10), umfassend:
ein Display (12) mit einer rechteckigen Form, die durch eine lange Seite (L2) entlang einer ersten Richtung und eine kurze Seite (L1) entlang einer zweiten Richtung definiert ist, wobei die zweite Richtung senkrecht zu der ersten Richtung ist; wobei
das tragbare Endgerät (10) für Folgendes konfiguriert ist:
Zugreifen auf einen Web-Server (72) im Internet, um Web-Daten von dem Web-Server (72) zu erhalten;
in einem Fall, in dem das Endgerät (10) in einer vertikal ausgerichteten Haltung ist, in der sich die lange Seite (L2) des Displays (12) entlang einer senkrechten Richtung relativ zu der Bodenfläche erstreckt, Anzeigen eines Bilds (80), dargestellt durch Bilddaten zur vertikalen Ausrichtung, wobei, wenn ein Nutzer das Display (12) nach unten scrollt, ein anderes Bild, dargestellt durch Bilddaten zur vertikalen Ausrichtung, in dem Display (12) gezeigt wird; und
in einem Fall, in dem das Endgerät (10) in einer horizontal ausgerichteten Haltung ist, in der sich die kurze Seite (L1) des Displays (12) entlang einer senkrechten Richtung relativ zu der Bodenfläche erstreckt, Anzeigen, anders als das Bild (80), dargestellt durch Bilddaten zur vertikalen Ausrichtung, das angezeigt wird in dem Fall, dass das Endgerät (10) die vertikal ausgerichtete Haltung ist, eines Bilds (90), dargestellt durch Bilddaten zur horizontalen Ausrichtung; wobei
das Bild (80), dargestellt durch Bilddaten zur vertikalen Ausrichtung, das andere Bild, dargestellt durch Bilddaten zur vertikalen Ausrichtung, und das Bild (90), dargestellt durch Bilddaten zur horizontalen Ausrichtung, jeweils in einem Bild beinhaltet sind, das durch die Web-Daten dargestellt wird; und
das tragbare Endgerät (10) ferner eine Steuervorrichtung umfasst, die durch die Druckanwendung (28) nach einem der Ansprüche 1 bis 6 realisiert wird.

9. Steuerverfahren für ein tragbares Endgerät (10), umfassend ein Display (12) mit einer rechteckigen Form, die durch eine lange Seite (L2) entlang einer ersten Richtung und eine kurze Seite (L1) entlang einer zweiten Richtung definiert ist, wobei die zweite Richtung senkrecht zu der ersten Richtung ist, wobei das tragbare Endgerät (10) konfiguriert ist, um auf einen Web-Server (72) im Internet zuzugreifen, um Web-Daten von dem Web-Server (72) zu erhalten, in einem Fall, in dem das Endgerät (10) in einer vertikal ausgerichteten Haltung ist, in der sich die lange Seite (L2) des Displays (12) entlang einer senkrechten Richtung relativ zu der Bodenfläche erstreckt, ein Bild (80) anzuzeigen, dargestellt durch Bilddaten zur vertikalen Ausrichtung, das in einem Bild beinhaltet ist, das durch die Web-Daten dargestellt ist, wobei, wenn ein Nutzer das Display (12) nach unten scrollt, ein anderes Bild, dargestellt durch Bilddaten zur vertikalen Ausrichtung und beinhaltet in dem Bild, dargestellt durch die Web-Daten, in dem Display (12) gezeigt wird, und in einem Fall, in dem das Endgerät (10) in einer horizontal ausgerichteten Haltung ist, in der sich die kurze Seite (L1) des Displays (12) entlang einer senkrechten Richtung relativ zu der Bodenfläche erstreckt, anders als das Bild (80), dargestellt durch Bilddaten zur vertikalen Ausrichtung, angezeigt in dem Fall, dass das Endgerät (10) die vertikal ausgerichtete Haltung ist, ein Bild (90) anzuzeigen, dargestellt durch Bilddaten zur horizontalen Ausrichtung und das in dem Bild beinhaltet ist, dargestellt durch die Web-Daten, wobei das Verfahren Folgendes umfasst:
Erschaffen von Displaydaten, die erste oder zweite Arten Vorschaubilder (100, 110, 200, 210) darstellen, die Druckergebnisse des Bilds angeben, dargestellt durch die Web-Daten, um die Displaydaten dem Display (12) zuzuführen,
in dem Fall, dass das Endgerät (10) in der vertikal ausgerichteten Haltung ist, Zuführen der ersten Art der Displaydaten, um zu verursachen, dass eine erste Art des Vorschaubilds (200) ein Druckergebnis von einem Teil eines Druckmediums angibt, das in dem Display (12) angezeigt werden soll, die erste Art Vorschaubild (200) eine erste Grenze (202) des Druckmediums und ein erstes Bild (204) angibt, das Teil des Bilds ist, dargestellt durch die Web-Daten, eine Links-rechts-Richtung der ersten Art Vorschaubild (200) entlang der kurzen Seite (L1) des Displays (12) ist und eine Oben-unten-Richtung der ersten Art Vorschaubild (200) entlang der langen Seite (L2) des Displays 12 ist, wobei die erste Art der Displaydaten Daten sind, um zu verursachen, dass eine Gesamtheit der ersten Art des Vorschaubilds (100) simultan in dem Display (12) gezeigt wird,
in dem Fall, dass das Endgerät (10) in der horizontal ausgerichteten Haltung ist, Zuführen der zweiten Art der Displaydaten, um zu verursachen, dass eine zweite Art des Vorschaubilds (210) ein Druckergebnis von einem Teil eines Druckmediums angibt, das in dem Display (12) angezeigt werden soll, die zweite Art Vorschaubild (210) eine zweite Grenze (212) des Druckmediums und ein zweites Bild (214) angibt, das Teil des Bilds ist, dargestellt durch die Web-Daten, die Links-rechts-Richtung der zweiten Art Vorschaubild (210) entlang der langen Seite (L2) des Displays (12) ist und die Oben-unten-Richtung der zweiten Art Vorschaubild (210) entlang der kurzen Seite (L1) des Displays (12) ist,
wobei die zweite Art der Displaydaten Daten sind, um zu verursachen, dass eine Gesamtheit der zweiten Art des Vorschaubilds (110) simultan in dem Display (12) gezeigt wird,
wobei ein Seitenverhältnis der ersten Grenze (202), angegeben durch die erste Art Vorschaubild (200), gleich wie ein Seitenverhältnis der zweiten Grenze (212) ist, angegeben durch die zweite Art Vorschaubild (210), und
wobei das erste Bild (204), das in der ersten Grenze (202) beinhaltet ist, angegeben durch die erste Art Vorschaubild (200), gleich wie das zweite Bild (214) ist, das in der zweiten Grenze (212) beinhaltet ist, angegeben durch die zweite Art Vorschaubild (210), und ein gleiches spezifisches Bild (204, 214) ist; und
Erschaffen von Druckdaten durch Nutzen der Web-Daten in einem Fall, in dem ein Druck unter einem Zustand angewiesen wird, in dem die erste Art Vorschaubild (200) oder die zweite Art Vorschaubild (210) in dem Display (12) gezeigt wird, wobei die Druckdaten ein Format aufweisen, das ein Drucker (60) interpretieren kann; und
Senden der Druckdaten an den Drucker (60),
wobei in beiden aus einem ersten Fall, in dem der Druck des spezifischen Bilds (204, 214) unter dem Zustand angewiesen wird, in dem die erste Art Vorschaubild (200) in dem Display (12) gezeigt wird, und einem zweiten Fall, in dem der Druck des spezifischen Bilds (204, 214) unter dem Zustand angewiesen wird, in dem die zweite Art Vorschaubild (210) in dem Display (12) angezeigt wird, die Druckdaten-Erschaffungseinheit (40) eine erste Art der Druckdaten erschafft, um zu verursachen, dass der Drucker (60) eine erste Art eines Drucks durchführt, und
in der ersten Art des Drucks die Links-rechts-Richtung des spezifischen Bilds (204, 214) entlang einer kurzen Seite eines Druckmediums (300) ist, und eine Gesamtlänge des spezifischen Bilds (204, 214) in der Links-rechts-Richtung der kurzen Seite des Druckmediums (300) entspricht.

## Revendications

1. Application d'impression (28) pour un dispositif terminal (10) de type portable, le dispositif terminal de type portable comprenant :
un écran (12) de forme rectangulaire définie par un côté long (L2) dans une première direction et un côté court (L1) dans une deuxième direction, la deuxième direction étant perpendiculaire à la première direction, le dispositif terminal (10) de type portable étant conçu pour : accéder à un serveur Web (72) sur l'Internet afin d'obtenir des données Web à partir du serveur Web (72) ; si le dispositif terminal (10) est dans une position orientée verticalement dans laquelle le côté long (L2) de l'écran (12) s'étend dans une direction perpendiculaire à la surface du sol, afficher une image (80) représentée par des données d'image pour orientation verticale et qui est comprise dans une image représentée par des données Web, sachant que si un utilisateur fait défiler l'écran (12) vers le bas, une autre image représentée par des données d'image pour orientation verticale et comprise dans l'image représentée par les données Web s'affiche sur l'écran (12) ; et si le dispositif terminal (10) est dans une position orientée horizontalement dans laquelle le côté court (L1) de l'écran (12) s'étend dans une direction perpendiculaire à la surface du sol, afficher, différemment de l'image (80) représentée par des données d'image pour orientation verticale et affichée si le dispositif terminal (10) est dans la position orientée verticalement, une image (90) représentée par des données d'image pour orientation horizontale et qui est comprise dans l'image représentée par les données Web ;
ladite application d'impression (28), lorsqu'elle est exécutée par le dispositif terminal de type portable, gouvernant :
une unité de création de données d'affichage (44) conçue pour créer un premier ou un deuxième type de données d'affichage représentant des images de prévisualisation (100, 110, 200, 210) respectives indiquant des résultats d'impression de l'image représentée par les données Web de sorte à fournir les données d'affichage à l'écran (12),
sachant que, si le dispositif terminal (10) est dans la position orientée verticalement, l'unité de création de données d'affichage (44) fournit le premier type de données d'affichage pour amener un premier type d'image de prévisualisation (200) indiquant un résultat d'impression d'un support d'impression unitaire à s'afficher sur l'écran (12), le premier type d'image de prévisualisation (200) indiquant une première bordure (202) du support d'impression et une première image (204) qui fait partie de l'image représentée par les données Web, la direction gauche-droite du premier type d'image de prévisualisation (200) se trouvant le long du côté court (L1) de l'écran (12), et la direction haut-bas du premier type d'image de prévisualisation (200) se trouvant le long du côté long (L2) de l'écran (12), le premier type de données d'affichage consistant en des données visant à amener la totalité du premier type d'image de prévisualisation (100) à s'afficher simultanément sur l'écran (12), et
si le dispositif terminal (10) est dans la position orientée horizontalement, l'unité de création de données d'affichage (44) fournit le deuxième type de données d'affichage pour amener un deuxième type d'image de prévisualisation (210) indiquant un résultat d'impression d'un support d'impression unitaire à s'afficher sur l'écran (12), le deuxième type d'image de prévisualisation (210) indiquant une deuxième bordure (212) du support d'impression et une deuxième image (214) qui fait partie de l'image représentée par les données Web, la direction gauche-droite du deuxième type d'image de prévisualisation (210) se trouvant le long du côté long (L2) de l'écran (12), et la direction haut-bas du deuxième type d'image de prévisualisation (210) se trouvant le long du côté court (L1) de l'écran (12), le deuxième type de données d'affichage consistant en des données visant à amener la totalité du deuxième type d'image de prévisualisation (110) à s'afficher simultanément sur l'écran (12),
le rapport d'aspect de la première bordure (202) indiquée par le premier type d'image de prévisualisation (200) étant identique au rapport d'aspect de la deuxième bordure (212) indiquée par le deuxième type d'image de prévisualisation (210), et
la première image (204) délimitée par la première bordure (202) indiquée par le premier type d'image de prévisualisation (200) étant identique à la deuxième image (214) délimitée par la deuxième bordure (212) indiquée par le deuxième type d'image de prévisualisation (210) et étant une même image spécifique (204, 214) ; et
une unité de création de données d'impression (40) conçue pour créer des données d'impression en utilisant les données Web si une impression est demandée tandis que le premier type d'image de prévisualisation (200) ou le deuxième type d'image de prévisualisation (210) est affiché sur l'écran (12), les données d'impression présentant un format qu'une imprimante (60) est en mesure d'interpréter, et
une unité d'envoi (42) conçue pour envoyer les données d'impression à l'imprimante (60),
sachant que, dans un premier cas où l'impression de l'image spécifique (204, 214) est demandée tandis que le premier type d'image de prévisualisation (200) est affiché sur l'écran (12) de même que dans un deuxième cas où l'impression de l'image spécifique (204, 214) est demandée tandis que le deuxième type d'image de prévisualisation (210) est affiché sur l'écran (12), l'unité de création de données d'impression (40) crée un premier type de données d'impression visant à amener l'imprimante (60) à réaliser un premier type d'impression, et
dans le premier type d'impression, la direction gauche-droite de l'image spécifique (204, 214) se situe le long d'un côté court d'un support d'impression (300), et la longueur totale de l'image spécifique (204, 214) dans la direction gauche-droite correspond au côté court du support d'impression (300).

2. Application d'impression (28) selon la revendication 1, dans laquelle
si la position du dispositif terminal (10) passe d'une position orientée verticalement à une position orientée horizontalement, l'unité de création de données d'affichage (44) fournit le deuxième type de données d'affichage pour amener le deuxième type d'image de prévisualisation (210) à s'afficher sur l'écran (12), et
si la position du dispositif terminal (10) passe d'une position orientée horizontalement à une position orientée verticalement, l'unité de création de données d'affichage (44) fournit le premier type de données d'affichage pour amener le premier type d'image de prévisualisation (200) à s'afficher sur l'écran (12).

3. Application d'impression (28) selon la revendication 1 ou 2, dans laquelle
après qu'une condition d'impression a été définie par l'utilisateur, si le dispositif terminal (10) est dans la position orientée verticalement, l'unité de création de données d'affichage (44) crée le premier type de données d'affichage de sorte à fournir le premier type de données d'affichage à l'écran (12), le premier type d'image de prévisualisation (200) indiquant un résultat d'impression de l'image spécifique (204) selon la condition d'impression définie, et
après que la condition d'impression a été définie par l'utilisateur, si le dispositif terminal (10) est dans la position orientée horizontalement, l'unité de création de données d'affichage (44) crée le deuxième type de données d'affichage de sorte à fournir le deuxième type de données d'affichage à l'écran (12), le deuxième type d'image de prévisualisation (200) indiquant un résultat d'impression de l'image spécifique (214) selon la condition d'impression définie.

4. Application d'impression (28) selon la revendication 3, dans laquelle
avant que la condition d'impression ne soit définie par l'utilisateur, l'unité de création de données d'affichage (44) crée les données d'affichage compte tenu de la taille d'un support d'impression prédéterminé, et
après que la condition d'impression a été définie par l'utilisateur, si le dispositif terminal (10) est orienté verticalement, l'unité de création de données d'affichage (44) crée le premier type de données d'affichage en utilisant la taille d'un support d'impression définie comme condition d'impression, et
après que la condition d'impression a été définie par l'utilisateur, si le dispositif terminal (10) est orienté horizontalement, l'unité de création de données d'affichage (44) crée le deuxième type de données d'affichage en utilisant la taille du support d'impression définie comme condition d'impression.

5. Application d'impression (28) selon l'une quelconque des revendications 1 à 4, dans laquelle
lorsqu'un premier mode a été sélectionné par l'utilisateur, l'unité de création de données d'impression (40) crée le premier type de données d'impression dans le premier ainsi que dans le deuxième cas,
lorsqu'un deuxième mode a été sélectionné par l'utilisateur, l'unité de création de données d'impression (40) crée le premier type de données d'impression dans le premier cas, et crée un deuxième type de données d'impression visant à amener l'imprimante (60) à réaliser un deuxième type d'impression dans le deuxième cas, et
dans le deuxième type d'impression, la direction haut-bas d'une image imprimée (402) se situe le long du côté court du support d'impression (300).

6. Application d'impression (28) selon l'une quelconque des revendications 1 à 5, dans laquelle
les données Web sont des données HTML.

7. Support de stockage non transitoire lisible par ordinateur sur lequel est stockée l'application d'impression (28) selon l'une quelconque des revendications 1 à 6.

8. Dispositif terminal (10) de type portable comprenant :
un écran (12) de forme rectangulaire définie par un côté long (L2) dans une première direction et un côté court (L1) dans une deuxième direction, la deuxième direction étant perpendiculaire à la première direction ;
le dispositif terminal (10) de type portable étant conçu pour :
accéder à un serveur Web (72) sur l'Internet afin d'obtenir des données Web à partir du serveur Web (72),
si le dispositif terminal (10) est dans une position orientée verticalement dans laquelle le côté long (L2) de l'écran (12) s'étend dans une direction perpendiculaire à la surface du sol, afficher une image (80) représentée par des données d'image pour orientation verticale, sachant que si un utilisateur fait défiler l'écran (12) vers le bas, une autre image représentée par des données d'image pour orientation verticale s'affiche sur l'écran (12), et
si le dispositif terminal (10) est dans une position orientée horizontalement dans laquelle le côté court (L1) de l'écran (12) s'étend dans une direction perpendiculaire à la surface du sol, afficher, différemment de l'image (80) représentée par des données d'image pour orientation verticale et affichée si le dispositif terminal (10) est dans la position orientée verticalement, une image (90) représentée par des données d'image pour orientation horizontale, étant entendu que
ladite image (80) représentée par des données d'image pour orientation verticale, ladite autre image représentée par des données d'image pour orientation verticale et ladite image (90) représentée par des données d'image pour orientation horizontale sont respectivement comprises dans une image représentée par les données Web, et
le dispositif terminal (10) de type portable comprend en outre un dispositif de commande gouverné par l'application d'impression (28) selon l'une quelconque des revendications 1 à 6.

9. Procédé de commande propre à un dispositif terminal (10) de type portable comprenant un écran (12) de forme rectangulaire définie par un côté long (L2) dans une première direction et un côté court (L1) dans une deuxième direction, la deuxième direction étant perpendiculaire à la première direction, le dispositif terminal (10) de type portable étant conçu pour accéder à un serveur Web (72) sur l'Internet afin d'obtenir des données Web à partir du serveur Web (72), si le dispositif terminal (10) est dans une position orientée verticalement dans laquelle le côté long (L2) de l'écran (12) s'étend dans une direction perpendiculaire à la surface du sol, afficher une image (80) représentée par des données d'image pour orientation verticale qui est comprise dans une image représentée par les données Web, sachant que si un utilisateur fait défiler l'écran (12) vers le bas, une autre image représentée par des données d'image pour orientation verticale et comprise dans l'image représentée par des données Web s'affiche sur l'écran (12), et, si le dispositif terminal (10) est dans une position orientée horizontalement dans laquelle le côté court (L1) de l'écran (12) s'étend dans une direction perpendiculaire à la surface du sol, afficher, différemment de l'image (80) représentée par des données d'image pour orientation verticale et affichée si le dispositif terminal (10) est dans la position orientée verticalement, une image (90) représentée par les données d'image pour orientation horizontale et qui est comprise dans l'image représentée par les données Web, le procédé comprenant :
la création de données d'affichage représentant un premier ou un deuxième type d'images de prévisualisation (100, 110, 200, 210) indiquant des résultats d'impression de l'image représentée par les données Web de sorte à fournir les données d'affichage à l'écran (12),
si le dispositif terminal (10) est dans la position orientée verticalement, la fourniture du premier type de données d'affichage pour amener un premier type d'image de prévisualisation (200) indiquant un résultat d'impression d'un support d'impression unitaire à s'afficher sur l'écran (12), le premier type d'image de prévisualisation (200) indiquant une première bordure (202) du support d'impression et une première image (204) qui fait partie de l'image représentée par les données Web, la direction gauche-droite du premier type d'image de prévisualisation (200) se trouvant le long du côté court (L1) de l'écran (12), et la direction haut-bas du premier type d'image de prévisualisation (200) se trouvant le long du côté long (L2) de l'écran (12), le premier type de données d'affichage consistant en des données visant à amener la totalité du premier type d'image de prévisualisation (100) à s'afficher simultanément sur l'écran (12),
si le dispositif terminal (10) est dans la position orientée horizontalement, la fourniture du deuxième type de données d'affichage pour amener un deuxième type d'image de prévisualisation (210) indiquant un résultat d'impression d'un support d'impression unitaire à s'afficher sur l'écran (12), le deuxième type d'image de prévisualisation (210) indiquant une deuxième bordure (212) du support d'impression et une deuxième image (214) qui fait partie de l'image représentée par les données Web, la direction gauche-droite du deuxième type d'image de prévisualisation (210) se trouvant le long du côté long (L2) de l'écran (12), et la direction haut-bas du deuxième type d'image de prévisualisation (210) se trouvant le long du côté court (L1) de l'écran (12), le deuxième type de données d'affichage consistant en des données visant à amener la totalité du deuxième type d'image de prévisualisation (110) à s'afficher simultanément sur l'écran (12),
le rapport d'aspect de la première bordure (202) indiquée par le premier type d'image de prévisualisation (200) étant identique au rapport d'aspect de la deuxième bordure (212) indiquée par le deuxième type d'image de prévisualisation (210), et
la première image (204) délimitée par la première bordure (202) indiquée par le premier type d'image de prévisualisation (200) étant identique à la deuxième image (214) délimitée par la deuxième bordure (212) indiquée par le deuxième type d'image de prévisualisation (210) et étant une même image spécifique (204, 214), et
la création de données d'impression en utilisant les données Web si une impression est demandée tandis que le premier type d'image de prévisualisation (200) ou le deuxième type d'image de prévisualisation (210) est affiché sur l'écran (12), les données d'impression présentant un format qu'une imprimante (60) est en mesure d'interpréter, et
l'envoi des données d'impression à l'imprimante (60),
sachant que, dans un premier cas où l'impression de l'image spécifique (204, 214) est demandée tandis que le premier type d'image de prévisualisation (200) est affiché sur l'écran (12) de même que dans un deuxième cas où l'impression de l'image spécifique (204, 214) est demandée tandis que le deuxième type d'image de prévisualisation (210) est affiché sur l'écran (12), l'unité de création de données d'impression (40) crée un premier type de données d'impression visant à amener l'imprimante (60) à réaliser un premier type d'impression, et
dans le premier type d'impression, la direction gauche-droite de l'image spécifique (204, 214) se situe le long d'un côté court d'un support d'impression (300), et la longueur totale de l'image spécifique (204, 214) dans la direction gauche-droite correspond au côté court du support d'impression (300).
